# EUROPEAN PATENT APPLICATION

(11) **EP 4 212 583 A1**
(43) Date of publication of application: **19.07.2023**
(21) Application number: 23152144.4
(22) Date of filing: 18.01.2023
(51) Int. Cl.: C08K 5/14, C09D 183/04, C09J 183/04

(54) **METHOD TO PROMOTE ADHESION OF PLASTIC AND OIL-BLEEDING LIQUID SILICONE**

(30) Priority: 18.01.2022 CN 202210057434
(71) Applicant: Tyco Electronics (Shanghai) Co., Ltd., Pilot Free Trade Zone Shanghai 200131 (CN); TE Connectivity Solutions GmbH, 8200 Schaffhausen (DE)
(72) Inventor: TAO, Dejie, Fremont, 94555 (US); WANG, Lei, Fremont, 94555 (US); WU, Yiliang, Fremont, 94555 (US); GAO, Ting, Fremont, 94555 (US); WU, Zenggang, Shanghai, 200233 (CN); JIANG, Kaixuan, Shanghai, 200233 (CN)
(74) Representative: Scott, Fiona Penelope Elaine

(57) **Abstract**

A method of manufacturing an electrical connector (14) and an electrical connector with a layer of primer (10) with a free radical initiator dissolved therein which is applied to the connector housing (12). An oil-bleeding liquid silicone (16) is applied to the layer or primer. The layer or primer crosslinks with the oil-bleeding liquid silicone to adhere the oil-bleeding liquid silicone. The method includes applying a layer or primer with a free radical initiator dissolved therein to the housing; applying an oil-bleeding liquid silicone to the primer; and crosslinking the oil-bleeding liquid silicone to the layer or primer to adhere the oil-bleeding silicone.

## Description

### FIELD OF THE INVENTION

The present invention relates to a method to improve adhesion between plastic and an oil-bleeding liquid silicone. In particular, the invention is directed to the use of a free radical initiator in either a primer, a separate layer of the oil-bleeding liquid silicone or the oil-bleeding liquid silicone itself to improve the adhesion to the plastic. It is believed that the free radical initiator promotes localized crosslinking at the interface between two adjoining layers without sacrificing the oil-bleeding property of liquid silicone.

### BACKGROUND OF THE INVENTION

Connectors used in various industries, such as automotive, appliance and aerospace often benefit from adhering an oil-bleeding liquid silicone to the housing of the connector to provide for both bonding and a lubrication function. While the oil-bleeding liquid silicone can be applied to and adhered directly to many connector housings or substrates, the oil-bleeding liquid silicone does not adhere well to such housings or substrates which may have acidic properties due to additives, such as flame-retardant additives, being added to the plastic housing.

It is therefore desirable to develop a method of application which allows the oil-bleeding liquid silicone to adhere to the polymeric housing. Alternatively, it is desirable to use a primer in conjunction with a free radical initiator which allows the oil-bleeding liquid silicone to adhere to the polymeric housing and which allows the oil-bleeding liquid silicone to maintain its lubrication function. Alternatively, it is desirable to use the free radical initiator in the oil-bleeding liquid silicone itself to promote adhesion.

### SUMMARY OF THE INVENTION

An embodiment is directed to an electrical connector. The connector has a housing comprising a polymer composition having an additive. A primer with with a free radical initiator dissolved therein is applied to the housing. An oil-bleeding liquid silicone is applied to the primer. The primer adheres to the housing and the primer crosslinks with the oil-bleeding liquid silicone at the interface of the primer and the oil-bleeding silicone to adhere the oil-bleeding liquid silicone to the primer.

An embodiment is directed to a method of manufacturing an electrical connector housing having a polymeric composition having an additive. The method includes applying a primer with a free radical initiator dissolved therein to the housing; adhering the primer to the housing; applying an oil-bleeding liquid silicone to the primer; and crosslinking the oil-bleeding liquid silicone with the primer at an interface between the primer and the oil-bleeding liquid silicone to adhere the oil-bleeding silicone to the primer.

An embodiment is directed to a method of manufacturing an electrical connector housing having a polymeric composition with an additive. The method includes dissolving the free radical initiator in an oil-bleeding liquid silicone and applying the oil-bleeding liquid silicone with a free radical initiator dissolved therein to the housing.

An embodiment is directed to an electrical connector. The electrical connector has a housing having polymeric composition with an additive. A primer with or without a free radical initiator is applied to the housing. A layer of oil-bleeding liquid silicone with a free radical initiator dissolved therein is applied to the primer. An oil-bleeding liquid silicone without a free radical initiator dissolved therein is applied to the layer of the oil-bleeding liquid silicone with the free radical initiator. The primer adheres to the housing and the layer of the oil-bleeding liquid silicone with the free radical initiator adheres to the primer. The layer of the oil-bleeding liquid silicone with the free radical initiator crosslinks with the oil-bleeding liquid silicone without the free radical initiator dissolved therein at the interface between the two layers to adhere the oil-bleeding liquid silicone without the free radical initiator to the layer.

In yet another embodiment, the electrical connector has a housing having a polymeric composition having an additive. A primer is applied to the housing. An oil-bleeding liquid silicone containing a free radical initiator is applied to the primer.

In yet another embodiment, the electrical connector has a housing having a polymeric composition comprising an additive. An oil-bleeding liquid silicone with a free radical initiator dissolved therein is applied to the housing.

Other features and advantages of the present invention will be apparent from the following more detailed description of the illustrative embodiment, taken in conjunction with the accompanying drawings which illustrate, by way of example, the principles of the invention.

### BRIEF DESCRIPTION OF THE DRAWINGS

FIG. 1 is a schematic cross-sectional view showing the primer of the present invention and the crosslinking to the oil-bleeding liquid silicone.
FIG. 2 is a diagrammatic view of the method of bonding the oil-bleeding liquid silicone to a surface of a housing using the primer of the present invention.
Fig. 3 is a diagrammatic view of the method of bonding the oil-bleeding liquid silicone having a free radical initiator dissolved therein to a surface of a housing.
Fig. 4 is a schematic cross-sectional view showing the primer and a layer of oil-bleeding liquid silicone mixed with a free radical initiator on the primer layer and a layer of oil-bleeding liquid silicone applied to the layer of oil-bleeding liquid silicone mixed with the free radical initiator.
Fig. 5 is a diagrammatic view of the method of bonding the oil-bleeding liquid silicone to a surface of a housing using a primer with no free radical initiator dissolved therein and a layer of oil-bleeding silicone mixed with the free radical initiator of the present invention.
Fig. 6 is a diagrammatic view of the method of bonding the oil-bleeding liquid silicone to a surface of a housing using a primer with a free radical initiator dissolved therein and a layer of oil-bleeding silicone mixed with a free radical initiator of the present invention.
Fig. 7 is a schematic cross-sectional view showing the primer on a housing, and a layer of oil-bleeding liquid silicone with a free radical initiator applied to the primer.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

The term "localized crosslinking" or "crosslinking"/"crosslink" refers to the situation in which free radical initiator in a layer induces chemically bonding between two adjoining layers to form an interface between the two layers. The term "non-crosslinking" /"non-crosslink" refers to the circumstance in which a chemical bond is not formed between two adjacent layers.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

In various applications, it is beneficial to provide an oil-bleeding liquid silicone to a housing of an electrical connector. The housing is formed of polymeric composition having an additive. The oil-bleeding liquid silicone provides both a seal and lubrication to reduce insertion forces. This can be advantageous in various environments or fields, including, but not limited to the automotive and aerospace industries.

In many applications, the oil-bleeding liquid silicone can be bonded or adhered directly to the surface of the housing which may be made from a plastic or a polymer composition comprising an additive. For example, for Horizontal Burn (HB) grade plastics which are plastics that have obtained a HB rating in accordance with UL 94 flammability standards, commonly used in housings, the oil-bleeding liquid silicone will adequately adhere to the HB grade plastic to provide the bonding and lubrication required. However, in other applications in which the plastic generates an acidic surface due to the blooming of additives in the plastic, such as, but not limited to, flame retardant additives for use with V-0 grade plastics according to LTL 94 flammability standards, the oil-bleeding liquid silicone does not properly adhere to the plastic. Therefore, a primer layer is required in order to provide the proper bonding between the plastic housing and the oil-bleeding liquid silicone.

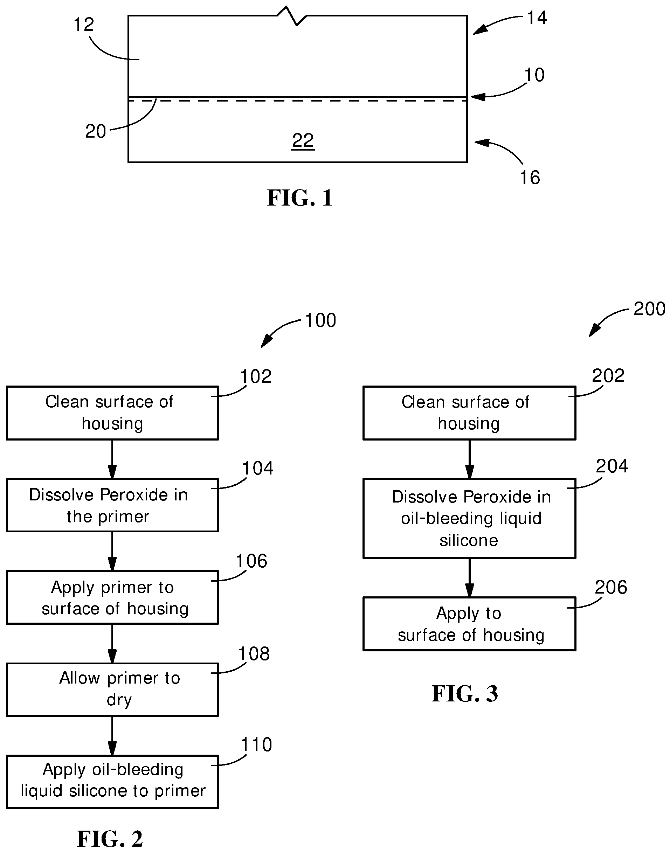

As shown in FIG. 1, the primer 10 is provided between the housing 12 of the connector 14 comprising a polymeric composition comprising an additive and the oil-bleeding liquid silicone 16. In the illustrative embodiment shown, the housing is made from V-0 grade plastic. The V-0 plastic may be any desirable plastic including, but not limited to, polyamide (PA) such as PA6, PA66, PA66/6T, PA4T, PA9T, PA10T, PA11, PA610; and polyesters, such as polybutylene terephthalate (PBT), polyethylene terephthalate (PET). The V-0 grade plastic has one or more flame retardant additives, such as, but not limited to, phosphonate-based flame retardant, which causes the surface of the housing to be acidic. The surface that is acidic has a pH of less than 7.0

Oil-bleeding silicone contains a small amount of uncured silicone oil in the cured silicone matrix which can migrate to the surface to provide lubrication. Another name for oil-bleeding silicone is self-lubricating silicone. The oil-bleeding liquid silicone 16 may be, but is not limited to, ELASTOSIL LR 3844/30 manufactured by Wacker Chemie AG. The oil-bleeding silicone may include, but is not limited to, 1% oil, 2% oil, 4% oil, 5% oil, 6% oil, for example, from 1%-6%, including from 4%-6%. Other oil-bleeding liquid silicones include ELASTOSIL LR 3856/30 from Wacker Chemie AG, Silopren LSR 3596/30 from Momentive, and SILASTIC 9204-35 from Dow Inc. Other elastomers such as ethylene propylene diene monomer rubber (EPDM), thermoplastic polyurethane (TPU), thermoplastic elastomers (TPE) etc., may also be used with this method. Many oil-bleeding silicones are platinum cured systems. Preferably, a free radical initiator is not added to the oil-bleeding silicone itself, as the addition of a free radical initiator tends to diminish the effectiveness of the oil-bleeding silicone.

The primer 10 has a free radical initiator mixed into the primer solution. In the illustrative embodiment, the primer base is a solution of reactive siloxanes and silanes in an organic solvent. The primer base may be, for example, Primer G 790 manufactured by Wacker Chemie AG.

In various embodiments, a free radical initiator is mixed into the primer solution. Free radical initiators are substances that can produce radical species under mild conditions and promote radical reactions. Examples of free radical initiators include but are not limited to peroxides and azo free radical initiators such as azobisisobutyronitrile (AIBN). In some embodiments, the free radical initiator is a peroxide which is dissolved in the primer 10 prior to application of the primer 10 containing free radical initiator on the housing 12. The primer 10 contains between about 0.3 % to about 15 % by weight of the free radical initiator, and preferably between about 1 % to about 10 % by weight of the free radical initiator. The primer 10 is applied to the housing 12 at a thickness of between about 0.1 µm to about 100 µm, and preferably between about 1 µm to about 50 µm. If the free radical initiator is a peroxide, the peroxide may be, but is not limited to, Dicumyl peroxide, 3,3,5,7,7-Pentamethyl-1,2,4-trioxepane, Di-tert-butyl peroxide, tert-Butyl peroxybenzoate, and the like.

The free radical initiator in the primer 10 induces chemical bonding between the primer 10 and the oil-bleeding liquid silicone 16. The free radical initiator in the primer 10 might also increase the crosslinking density of area at the interface 20 of the primer and the oil-bleeding silicone 16. As shown in FIG. 1, the chemical bonding between the primer and the oil-bleeding liquid silicone 16 occurs only in the interface 20 of the oil-bleeding liquid silicone 16. As shown, the interface 20 is localized to the area between the primer 10 and the oil-bleeding liquid silicone 16. This allows the adhesion of the oil-bleeding liquid silicone 16 to the primer 10 and the housing 12 without adversely affecting the release of the oil from the oil-bleeding liquid silicone in the non-crosslinking area 22 of the oil-bleeding liquid silicone 16.

As shown in FIG. 2, the method 100 of bonding the oil-bleeding liquid silicone 16 to the surface, which may be acidic, of the housing 12 comprised of a polymeric composition includes: cleaning the surface of the housing 12 (step 102); dissolving a free radical initiator in the primer 10 (step 104); applying the primer 10 to the surface of the housing 12 (step 106); allowing the primer 10 to dry (step 108); and applying the oil-bleeding liquid silicone 16 to the primer 10 (step 110).

Surfaces of the housing 12 to which primer will be applied, have to be dry and free from grease, oil, wax, dust, or other contaminants. The surface should be cleaned by physical cleaning, such as by plasma, corona, etc., or by chemical cleaning with solvent, such as, but not limited to, isopropyl alcohol (IPA), acetone, or ethanol. Other surface treatment methods, such as sand blasting, metal brushing, chemical etching, etc. maybe also used to promote the adhesion.

Once the surfaces of the housing 12 are cleaned and the primer properly prepared with the free radical initiator of between about 0.3 % to about 15 % by weight therein, the primer 10 can be applied by spraying, immersion or dipping, blade coating or brushing, or other suitable method. The primer 10 should be applied as thin as possible and be free of air bubbles, but be of sufficient thickness to properly bond to the housing 12 and crosslink with the oil-bleeding liquid silicone 16. As previously stated, the primer 10 is applied in a layer of between about 0.1 µm to about 100 µm thickness.

Drying of the primer 10 allows the primer 10 to firmly adhere to the surface of the housing 12. The length of the drying time is dependent upon the application and the environment in which the drying occurs.

The oil-bleeding liquid silicone 16 is then applied to the primer after the drying process. The length of the drying time is dependent upon the application and the environment in which the drying occurs. Initial adhesion directly after cure of the silicone will in many cases be high.

The use of a free radical initiator dissolved in the primer 10 allows the oil-bleeding liquid silicone 16 to bond to the acidic surface of the polymeric composition of the housing 12, without the need to make changes to composition of the oil-bleeding liquid silicone 16. This allows the same oil-bleeding liquid silicone 16 to be used for housing or substrates with acidic surfaces and housings or substrates with non-acidic surfaces. The crosslinking area or interface 20 between the primer 10 and oil-bleeding liquid silicone 16 also allows the oil-bleeding liquid silicone 16 to provide the appropriate lubricating function, by the release of the oil.

An alternative method of adhering the oil-bleeding liquid silicone 16 to the housing 12 is shown in FIG. 3. In this method, the free radical initiator is dissolved directly in the oil-bleeding liquid silicone 16. A primer is not used. The oil-bleeding liquid silicone 16 contains between about 0.01 % to about 5 % by weight of the free radical initiator, and preferably between about 0.1 % to about 2 % by weight of the free radical initiator. The oil-bleeding liquid silicone 16 is applied to the housing 12 comprising a polymeric composition at the desired thickness as required for the oil-bleeding liquid silicone 16 to provide sufficient protection and lubrication for the housing 12. The free radical initiator in the oil-bleeding liquid silicone 16 increases the adhesion between the oil-bleeding liquid silicone 16 and the polymeric composition of the housing 12.

As shown in FIG. 3, the method 200 of bonding the oil-bleeding liquid silicone 16 to the acidic surface of the housing 12 includes: cleaning the surface of the housing 12 (step 202); dissolving the free radical initiator in the oil-bleeding liquid silicone 16 (step 204); and applying the oil-bleeding liquid silicone 16 with the free radical initiator dissolved therein to the surface of the housing 12 (step 206).

Surfaces of the housing 12 to which the oil-bleeding liquid silicone 16 is applied have to be dry and free from grease, oil, wax, dust, or other contaminants. The surface should be cleaned as described above.. Once the surfaces of the housing 12 are cleaned and the oil-bleeding liquid silicone 16 properly prepared with the free radical initiator of between about 0.01 % to about 5 % by weight therein, can be applied by spraying, immersion or dipping, blade coating or brushing, or other suitable method.

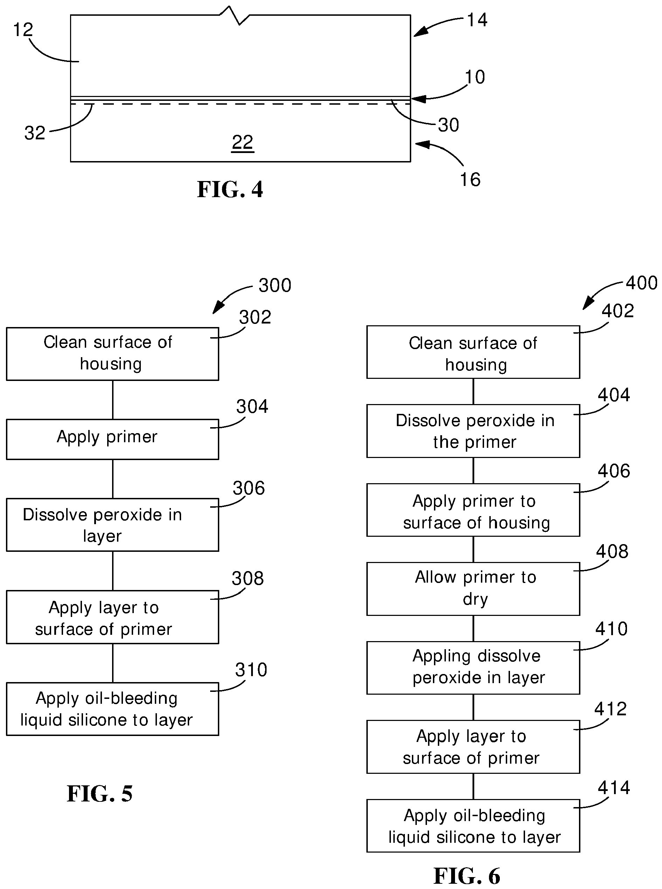

As shown in FIG. 4, the primer 10 and a layer 30 of oil-bleeding silicone mixed with free radical initiator is provided between the housing 12 of the connector 14 and the oil-bleeding liquid silicone 16. In the illustrative embodiment shown the housing is made from V-0 grade plastic.

The oil-bleeding liquid silicone 16 may be, but is not limited to, ELASTOSIL LR 3844/30 manufactured by Wacker Chemie AG. The oil-bleeding silicone may include, but is not limited to, 1% oil, 2% oil, 4% oil, 5% oil, 6% oil. Many oil-bleeding silicones are platinum cured systems. In this embodiment, there are two layers that include oil-bleeding liquid silicone. Only the layer that forms the interface between the primer and the oil-bleeding liquid silicone layer includes the free radical initiator.

The layer 30 is an oil-bleeding silicone with the free radical initiator mixed or dissolved in the oil-bleeding silicone. In various embodiments, the free radical initiator is dissolved in the composition used to form the layer 30 prior to application of the layer 30 containing the free radical initiator. The layer 30 contains between about 0.3 % to about 15 % by weight of the free radical initiator, and preferably between about 1 % to about 10 % by weight of the free radical initiator. The layer 30 is applied at a thickness of between about 0.1 µm to about 100 µm, and preferably between about 1 µm to about 50 µm.

The layer 30 is applied to the primer 10 after the primer has been applied to the housing 12. As shown in FIG. 4, the crosslinking between the layer 30 and the oil-bleeding liquid silicone 16 occurs only in the crosslinking area or interface 32 of the oil-bleeding liquid silicone 16, which is localized to the interface 32 between the layer 30 and the oil-bleeding liquid silicone 16. This allows the adhesion of the oil-bleeding liquid silicone 16 to the layer 30, the primer 10 and the housing 12 without adversely affecting the release of the oil from the oil-bleeding liquid silicone in the non-crosslinking area 32 of the oil-bleeding liquid silicone 16.

In the above illustrative embodiments in which layer 30 comprises an oil-bleeding liquid silicone and a free radical initiator, the primer 10 does not have a free radical initiator mixed in the solution. In other illustrative embodiments in which layer 30 comprises an oil-bleeding liquid silicone and free radical initiator, the primer 10 also has a free radical initiator mixed into the solution prior to application to the polymeric housing.

As shown in FIG. 5, the method 300 of bonding the oil-bleeding liquid silicone 16 to the surface, which may be acidic, of the housing 12 includes: cleaning the surface of the housing 12 (step 302); applying the primer 10 to the housing 12 (step 304); dissolving a free radical initiator in the layer 30 of oil-bleeding liquid silicone (step 306); applying the layer 30 of oil-bleeding liquid silicone 16 with the free radical initiator dissolved therein to the surface of the primer 10 (step 308) as the first oil-bleeding silicone layer; and applying oil-bleeding silicone 16 with or without a free radical initiator as the second layer (step 310).

Alternatively, as shown in FIG. 6, the method 400 of bonding the oil-bleeding liquid silicone 16 to the acidic surface of the housing 12 includes: cleaning the surface of the housing 12 (step 402); dissolving a free radical initiator in the primer 10 (step 404); applying the primer 10 to the surface of the housing 12 (step 406); allowing the primer 10 to dry (step 408); dissolving a free radical initiator in the layer 30 of oil-bleeding liquid silicone (step 410); applying the layer 30 of oil-bleeding liquid silicone 16 with the free radical initiator dissolved therein to the surface of the primer 10 (step 412) as the first oil-bleeding silicone layer; and applying oil-bleeding silicone 16 with or without the free radical initiator as the second layer (step 414).

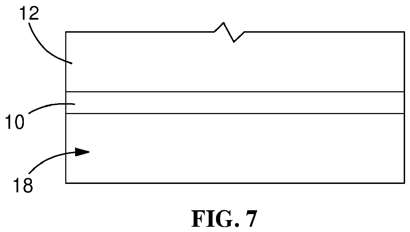

In yet another embodiment, shown in Fig.7, a layer of primer 10 is applied to the polymeric housing 12. An oil-bleeding liquid silicone is mixed with a free radical initiator to form a composition 18. Composition 18 is applied to the primer 10. Composition 18 achieves improved adhesion to the polymeric housing.

While the invention has been described with reference to a preferred embodiment, it will be understood by those skilled in the art that various changes may be made, and equivalents may be substituted for elements thereof without departing from the spirit and scope of the invention as defined in the accompanying claims. One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. An electrical connector (14) with layers having improved adhesion comprising:
a housing (12) comprising a polymeric composition comprising an additive;
a primer (10) applied to the housing, the primer comprising a free radical initiator dissolved therein; and
an oil-bleeding liquid silicone (16) applied to the primer.

2. The electrical connector of claim 1, wherein the primer has a thickness of between about 1 µm to about 10 µm.

3. The electrical connector of claim 1, wherein the primer contains between about 0.3 % to about 1 % by weight of the free radical initiator.

4. The electrical connector of claim 1, wherein the improved adhesion between the primer (10) and the oil-bleeding liquid silicone (16) occurs only at the interface (20) of the primer and the oil-bleeding liquid silicone, preferably wherein the free radical initiator is chosen from the group consisting of peroxides and azo free radical initiators.

5. The electrical connector of claim 1, wherein the primer has a base of reactive siloxanes and silanes in an organic solvent.

6. The electrical connector of claim 1, wherein the additive causes the housing to have an acidic surface.

7. The electrical connector of claim 1, wherein the additive is a flame retardant additive, preferably wherein (a) the additive is phosphonate-based, or (b) the housing with the flame retardant additive has a UL 94 V-0 grade rating.

8. A method of manufacturing an electrical connector (14) having a housing (12) comprising a polymeric composition comprising an additive, the method comprising:
applying a primer (10) with a free radical initiator dissolved therein to the housing (12);
adhering the primer to the housing;
applying an oil-bleeding liquid silicone (16) to the primer; and
crosslinking the oil-bleeding liquid silicone to the primer to adhere the oil-bleeding liquid silicone to the primer.

9. The method as recited in claim 8, further comprising at least one of allowing the primer to dry after being applied to the housing and allowing the oil-bleeding liquid silicone to dry after being applied to the primer.

10. The method as recited in claim 8, wherein the primer is applied in a thickness of between about 1 µm to about 10 µm.

11. The method as recited in claim 8, wherein the primer and the oil-bleeding liquid silicone adhere to each other at an interface between the primer and the oil-bleeding liquid silicone, preferably wherein lubrication properties of the oil-bleeding liquid silicone are not affected by the interface.

12. The method as recited in claim 8, wherein the additive is a flame retardant additive which causes the housing to have an acidic surface.

13. An electrical connector (14) comprising:
a housing (12) having a polymeric composition comprising an additive; and
an oil-bleeding liquid silicone (16) with a free radical initiator dissolved therein applied to the housing;
wherein the oil-bleeding liquid silicone increases adhesion between the oil-bleeding liquid silicone and the polymeric composition of the housing.

14. The electrical connector of claim 13, wherein the oil-bleeding liquid silicone contains between about 0.1 % to about 5 % by weight of the free radical initiator.
